(19) Europäisches Patentamt
European Patent Office
Office européen des brevets

(11) **EP 3 079 958 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(21) Anmeldenummer: **15702682.4**

(22) Anmeldetag: **23.01.2015**

(51) Int Cl.:
**B60T 17/00** *(2006.01)*

(86) Internationale Anmeldenummer:
**PCT/EP2015/051304**

(87) Internationale Veröffentlichungsnummer:
**WO 2015/117836 (13.08.2015 Gazette 2015/32)**

(54) **ANORDNUNG UND VERFAHREN ZUM TROCKNEN VON LUFT SOWIE FAHRZEUG MIT EINER DERARTIGEN ANORDNUNG**

ARRANGEMENT AND METHOD FOR DRYING AIR, AND VEHICLE COMPRISING SUCH AN ARRANGEMENT

ENSEMBLE ET PROCÉDÉ DE SÉCHAGE D'AIR, ET VÉHICULE ÉQUIPÉ D'UN TEL ENSEMBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.02.2014 DE 102014202273**

(43) Veröffentlichungstag der Anmeldung:
**19.10.2016 Patentblatt 2016/42**

(73) Patentinhaber: **Siemens Aktiengesellschaft 80333 München (DE)**

(72) Erfinder:
• **BAUER, Franz**
 **90562 Heroldsberg (DE)**
• **LICHTERFELD, Jens Peter**
 **91052 Erlangen (DE)**

(56) Entgegenhaltungen:
**DE-A1- 19 911 741      DE-A1-102012 007 470**
**US-A1- 2003 183 077**

**Beschreibung**

Die Erfindung betrifft eine Anordnung zum Trocknen von Luft mit einer Steuereinrichtung, einer Kompressoreinrichtung und einem Lufttrockner, bei der durch Umschalten eines Umschaltmittels des Lufttrockners unter der Einwirkung eines von einer Steuereinrichtung an das Umschaltmittel ausgegebenen Umschaltsignals zwei an die Kompressoreinrichtung angeschlossene Trocknungskammern des Lufttrockners wechselweise in eine Trocknungs- und eine Regenerationsphase schaltbar sind.

Die Erfindung betrifft auch ein Fahrzeug, insbesondere Schienenfahrzeug, mit einer derartigen Anordnung.

Ferner betrifft die Erfindung ein Verfahren zum Trocknen von Luft, bei dem durch Umschalten eines Umschaltmittels eines Lufttrockners unter der Einwirkung eines von einer Steuereinrichtung an das Umschaltmittel ausgegebenen Umschaltsignals zwei an eine Kompressoreinrichtung angeschlossene Trocknungskammern des Lufttrockners wechselweise in eine Trocknungs- und eine Regenerationsphase geschaltet werden.

Eine gattungsgemäße Anordnung, ein gattungsgemäßes Fahrzeug und ein gattungsgemäßes Verfahren sind aus der Druckschrift EP 0 199 948 B1 bekannt. Hierbei kommen ein Drehzahlsensor in Form eines "Drehzahlgebers" und ein Druckschalter zum Einsatz. Ein Zähler zählt vom Drehzahlsensor ausgegebene Impulse, deren Anzahl dem Istwert der Drehzahl eines Kompressors der Kompressoreinrichtung entspricht, wenn der Druckschalter in eine zum Zähler führende Signalleitung ein Signal einspeist.

Weiterhin sind aus der Druckschrift US 2003/183077 A1 eine Anordnung und ein Verfahren zum Trocknen von Luft sowie ein Fahrzeug mit einer Anordnung zum Trocknen von Luft bekannt. Dabei gibt eine als kontinuierliches Flussmodul bezeichnete Steuereinrichtung Steuersignale an Kontrollgeräte zweier Trocknungskammern aus, wodurch die beiden Trocknungskammern wechselweise in eine Trocknungs- und eine Regenerationsphase geschaltet werden.

Der Erfindung liegt die Aufgabe zu Grunde eine gattungsgemäße Anordnung, ein Fahrzeug mit einer gattungsgemäßen Anordnung sowie ein gattungsgemäßen Verfahren anzugeben, die das Trocknen der Luft vereinfachen.

Zur Lösung dieser Aufgabe ist die Steuereinrichtung bei der erfindungsgemäßen Anordnung, nach Anspruch 1, und dem erfindungsgemäßen Fahrzeug geeignet ausgebildet, einen der Kompressoreinrichtung vorgegeben Sollwert zu erfassen und in Abhängigkeit des erfassten Sollwertes das Umschaltsignal auszugeben.

Entsprechend wird diese Aufgabe bei dem erfindungsgemäße Verfahren, nach Anspruch 7, dadurch gelöst, dass die Steuereinrichtung einen der Kompressoreinrichtung vorgegeben Sollwert erfasst und in Abhängigkeit des erfassten Sollwertes das Umschaltsignal ausgibt.

Ein wesentlicher Vorteil ist, dass im Vergleich zu der bekannten Anordnung und dem bekannten Verfahren (EP 0 199 948 B1) bei der erfindungsgemäßen Anordnung und dem erfindungsgemäßen Verfahren der Einsatz eines Drehzahlsensors in Form eines Drehzahlgebers nicht mehr erforderlich ist.

Es wird als besonders vorteilhaft angesehen, wenn die Steuereinrichtung der erfindungsgemäßen Anordnung geeignet ausgebildet ist, als den vorgegebenen Sollwert einen Frequenzsollwert oder einen Drehzahlsollwert zu erfassen, der einer Antriebseinheit der Kompressoreinrichtung vorgegeben ist. Entsprechend ist es besonders vorteilhaft, wenn die Steuereinrichtung bei dem erfindungsgemäßen Verfahren als den vorgegebenen Sollwert einen Frequenzsollwert oder einen Drehzahlsollwert erfasst, der einer Antriebseinheit der Kompressoreinrichtung vorgegeben wird.

Da die Förderleistung der Kompressoreinrichtung proportional zu dem vorgegebenen Frequenzsollwert bzw. dem vorgegebenen Drehzahlsollwert ist, führt eine Erhöhung des Frequenzsollwert bzw. des Drehzahlsollwert somit automatisch zur Verkürzung des Umschaltintervalls des Lufttrockners und eine Senkung des Frequenzsollwert bzw. des Drehzahlsollwert führt somit automatisch zur Verlängerung des Umschaltintervalls des Lufttrockners. Damit wird der Lufttrockner optimal ausgenutzt, was sich wiederum positiv auf seine Wartungs-und Überholungszyklen auswirkt.

Weiterhin wird es als vorteilhaft angesehen, wenn die Steuereinrichtung der erfindungsgemäßen Anordnung geeignet ausgebildet ist, einen Zeitwert zu erfassen, der der Zeitspanne entspricht, bei der die Kompressoreinrichtung eingeschaltet und in Abhängigkeit des vorgegebenen Sollwertes betrieben ist, anhand einer erfassten oder hinterlegten Förderleistung-Sollwert-Kennlinie eine dem Sollwert entsprechende Förderleistung und durch Integration der Förderleistung über den Zeitwert einen dem Sollwert entsprechenden Fördervolumenwert zu ermitteln und mit einem aktuell abgespeicherten Fördervolumenzwischenwert zu einem Fördervolumengesamtwert aufzusummieren und das Umschaltsignal auszugeben, wenn der Fördervolumengesamtwert einen erfassten oder hinterlegten Fördervolumenmaximalwert erreicht.

Entsprechend wird es als vorteilhaft angesehen, wenn die Steuereinrichtung bei dem erfindungsgemäßen Verfahren einen Zeitwert erfasst, der der Zeitspanne entspricht, bei der die Kompressoreinrichtung eingeschaltet und in Abhängigkeit des vorgegebenen Sollwertes betrieben ist, anhand einer erfassten oder hinterlegten Förderleistung-Sollwert-Kennlinie eine dem Sollwert entsprechende Förderleistung und durch Integration der Förderleistung über den Zeitwert einen dem Sollwert entsprechenden Fördervolumenwert ermittelt und mit einem aktuell abgespeicherten Fördervolumenzwischenwert zu einem Fördervolumengesamtwert aufsummiert und das Umschaltsignal ausgibt, wenn der Fördervolumengesamtwert einen erfassten oder hinterlegten Fördervolumenmaximalwert erreicht.

Ferner wird es als vorteilhaft angesehen, wenn die Steuereinrichtung der erfindungsgemäßen Anordnung geeignet ausgebildet ist, den ermittelten Fördervolumengesamtwert als den Zwischenwert abzuspeichern, wenn der Fördervolumengesamtwert beim Ausschalten der Kompressoreinrichtung kleiner als der Fördervolumenmaximalwert ist.

Die Steuereinrichtung speichert also mit Vorteil den Fördervolumengesamtwert als den Zwischenwert ab, wenn der Fördervolumengesamtwert beim Ausschalten der Kompressoreinrichtung kleiner als der Fördervolumenmaximalwert ist.

Die erfindungsgemäße Anordnung kommt vorzugsweise bei einem Fahrzeug, insbesondere einem Schienenfahrzeug, zum Einsatz, wobei es als besonders vorteilhaft angesehen wird, wenn ein Bremssteuergerät, das zumindest eine Bremsanordnung des Fahrzeugs steuert, die Steuereinrichtung bildet.

Zur weiteren Erläuterung der Erfindung sind in der

Figur 1 eine schematische Darstellung eines erfindungsgemäßen Fahrzeugs in Form eines Schienenfahrzeugs mit einer ersten Ausführungsform einer erfindungsgemäßen Anordnung zum Trocknen von Luft in einer ersten Schaltstellung, in der

Figur 2 die erste Ausführungsform der erfindungsgemäßen Anordnung in einer zweiten Schaltstellung, in der

Figur 3 eine schematische Darstellung der erfindungsgemäßen Verfahrens zum Trocknen von Luft, in den

Figuren 4 und 5 eine zweite Ausführungsform der erfindungsgemäßen Anordnung in ihren zwei Schaltstellungen und in den

Figuren 6 und 7 eine dritte Ausführungsform der erfindungsgemäßen Anordnung in ihren zwei Schaltstellungen gezeigt.

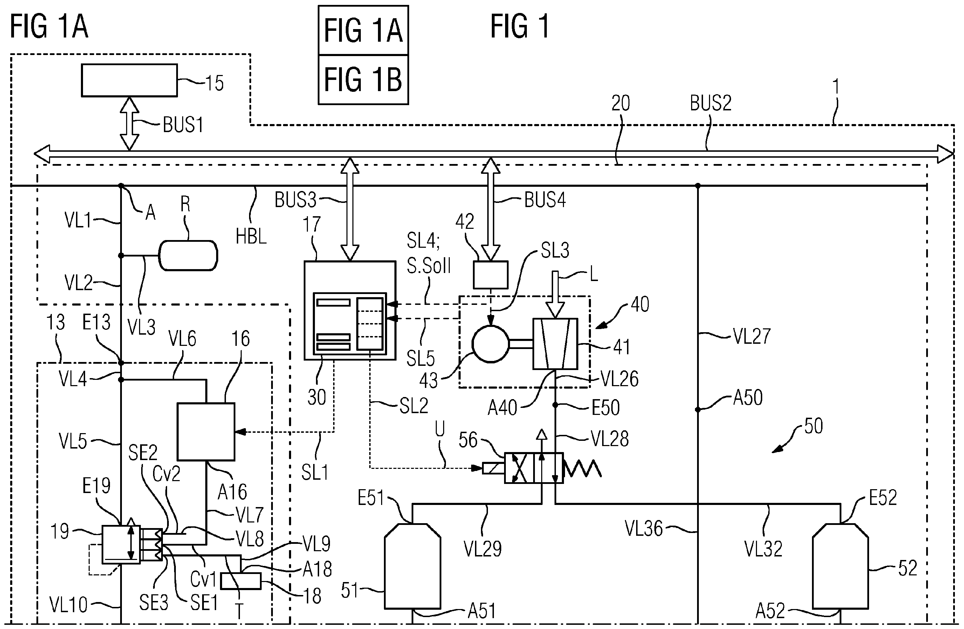

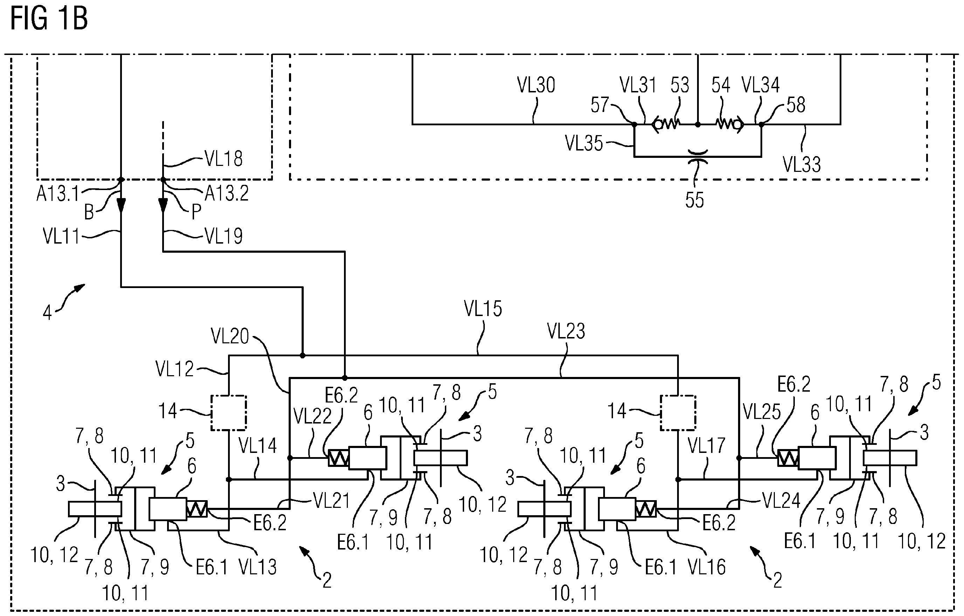

Figur 1 zeigt eine schematische Darstellung eines erfindungsgemäßen Fahrzeugs 1, das hier vorzugsweise ein Schienenfahrzeug ist. Das Schienenfahrzeug verfügt über Fahrwerke 2 in Form von Drehgestellen. Die Drehgestelle weisen jeweils zwei Radsätze auf. Die Radsätze weisen jeweils eine Welle 3 auf, an deren Enden Räder gehalten sind. Weiterhin verfügt das Schienenfahrzeug über ein hier als Ganzes mit 4 bezeichnetes Bremssystem.

Jeder Welle 3 des Schienenfahrzeugs ist jeweils eine Bremseinheit 5 des Bremssystems zugeordnet. Jede der Bremseinheiten 5 weist einen Bremsaktor 6 und vom Bremsaktor 6 betätigte erste Bremsmittel 7 in Form einer mit zumindest einem Bremsbelag 8 versehenen Kraftübertragungsmechanik 9 auf. Dabei wirken die ersten Bremsmittel 7 jeder dieser Bremseinheiten 5 jeweils mit ihnen zugeordneten zweiten Bremsmitteln 10 in Form eines mit der Welle 3 rotierenden und mit zumindest einer Bremsfläche 11 versehenen Bremselementes 12 zusammen.

Die Bremselemente 12 sind hier jeweils als eine Wellenbremsscheibe ausgebildet. Als Bremselemente könnten aber alternativ auch Radbremsscheiben, die Räder selbst oder auch Bremstrommeln dienen.

Die Kraftübertragungsmechaniken 9 sind hier jeweils als eine mit zwei Bremsbelägen 8 versehene Zuspanneinrichtung in Form einer Bremszange ausgebildet. Die Zuspanneinrichtung könnte aber alternativ auch als Bremssattel ausgebildet sein.

Die mit den Bremsbelägen 8 versehene Kraftübertragungsmechanik 9 ist unter der Einwirkung des Bremsaktors 6, der an einem Drehgestellrahmen des Drehgestells abgestützt ist, zur Herstellung eines Reibschlusses zwischen den ersten Bremsmitteln 7 und den zweiten Bremsmitteln 10 über dem Bremselement 12 zuspannbar.

Jeder der Bremsaktoren 6 ist ein mit einem pneumatischen Bremsdruck B beaufschlagbarer Bremsaktor, wobei der Bremsdruck B von einer Bremsanordnung 13 des Bremssystems ausgegeben und vor dem Beaufschlagen der Bremsaktoren 6 vorzugsweise durch eine Gleitschutzeinrichtung 14 einer Gleitschutzkorrektur unterzogen wird.

Das Bremssystem weist eine Vielzahl von pneumatischen Verbindungsleitungen VL1, VL2, ... VL25 auf.

Die als ein Bremssteuermodul ausgebildete Bremsanordnung 13 des Bremssystems ist über die pneumatischen Verbindungsleitungen VL1 und VL2, die einen Eingang E13 der Bremsanordnung 13 mit einem Ausgang A einer Hauptluftbehälterleitung HBL verbinden, an die Hauptluftbehälterleitung HBL angeschlossen.

Außerdem ist die Bremsanordnung 13 über eine Signalübertragungseinrichtung an eine zentrale Fahrzeugsteuerung 15 angeschlossen. Die Signalübertragungseinrichtung ist hier lediglich beispielhaft ein Datenbus, von dem Datenbusabschnitte BUS1, BUS2, BUS3 und BUS4 gezeigt sind.

Die Bremsanordnung 13 weist zumindest eine direkt wirkende elektro-pneumatische Bremseinrichtung 16 auf, die von einem elektronischen Bremssteuergerät 17 über eine Steuerleitung SL1 mittels Bremssteuersignalen gesteuert wird. Die Bremssteuersignale ermittelt das Bremssteuergerät 17 anhand einer von der zentralen Fahrzeugsteuerung 15 ausgegebenen und über die Datenbusabschnitte BUS1, BUS2 und BUS3 an das Bremssteuergerät 17 übertragene Bremsanforderung.

Außerdem weist die Bremsanordnung 13 eine Lasterfassungseinrichtung 18 und eine Ventileinrichtung 19 auf.

Die direkt wirkende elektro-pneumatische Bremseinrichtung 16, die über die Verbindungsleitungen VL3, VL2 VL4 und VL6 an ein von der Hauptluftbehälterleitung HBL gespeistes Reservoir R angeschlossen ist, gibt insbesondere zur Betriebsbremsung des Schienenfahrzeugs an einem Ausgang A16 über eine Verbindungsleitung VL7 einen ersten Vorsteuerdruck Cv1 an einen ersten Steuereingang SE1 der nachgeschalteten Ventileinrichtung 19 aus. In hier nicht gezeigter Weise wird insbesondere zur Notbremsung, zur Zwangsbremsung oder zur Schnellbremsung des Fahrzeugs über eine Verbindungsleitung VL8 an einen zweiten Steuereingang SE2 der Ventileinrichtung 19 ein zweiter Vorsteuerdruck Cv2 ausgegeben. An einem dritten Eingang SE3 der Ventileinrichtung 19 liegt ein Steuersignal in Form eines Tastdruckes T der Lasterfassungseinrichtung 18 an. Den Tastdruck T gibt die Lasterfassungseinrichtung 18 an einem Ausgang A18 über eine Verbindungsleitung VL9 an den Eingang SE3 der Ventileinrichtung 19 aus.

Die Ventileinrichtung 19 dient zur Verstärkung des Volumenstroms. Hierzu ist ein Eingang E19 der Ventileinrichtung 19 über die Verbindungsleitungen VL1, VL2, VL4 und VL5 an die Hauptluftbehälterleitung HBL angeschlossen. Die Ventileinrichtung 19 setzt die Vorsteuerdrücke Cv1; Cv2- in einem vom Tastdruck T abhängigen Übersetzungsverhältnis - in den Bremsdruck B um und steuert den Bremsdruck B an einem Ausgang aus.

Der von der Ventileinrichtung 19 der Bremsanordnung 13 ausgesteuerte Bremsdruck B wirkt über Bremsdruckpfade in Form der pneumatischen Verbindungsleitungen VL10, VL11, VL12, VL13; VL10, VL11, VL12, VL14; VL10, VL11, VL15, VL16; VL10, VL11, VL15, VL17 auf die Bremsaktuatoren 6. Dabei sind die pneumatischen Verbindungsleitungen jeweils an einen ersten Eingang E6.1 des zugeordneten Bremsaktuators 6 angeschlossen.

Ein von der hier nicht gezeigten Parkbremseinrichtung der Bremsanordnung an einem Ausgang A13.2 der Bremsanordnung 13 ausgesteuerter Parkbremsdruck P wirkt über Parkbremsdruckpfade in Form der pneumatischen Verbindungsleitungen VL18, VL19, VL20, VL21; VL18, VL19, VL20, VL22; VL18, VL19, VL23, VL24; VL18, VL19, VL23, VL25 auf die Bremsaktuatoren 6. Dabei sind die Verbindungsleitungen jeweils an einen zweiten Eingang E6.2 des zugeordneten Bremsaktuators 6 angeschlossen.

Das Schienenfahrzeug 1 weist ferner eine erste Ausführungsform 20 der erfindungsgemäßen Anordnung zum Trocknen von Luft L auf. Diese umfasst eine als Ganzes mit 30 bezeichnete Steuereinrichtung, eine als Ganzes mit 40 bezeichnete Kompressoreinrichtung, einen als Ganzes mit 50 bezeichneten Lufttrockner und das Reservoir R.

Dabei bildet das Bremssteuergerät 17, das die gezeigte Bremsanordnung 13 des Fahrzeugs 1 steuert, die Steuereinrichtung 30. Die Steuereinrichtung 30 ist also integraler Bestandteil des Bremssteuergerätes 17.

Ein Lufttrocknereingang E50 ist über eine pneumatische Verbindungsleitung VL26 an einen Ausgang A40 der Kompressoreinrichtung 40 angeschlossen. Ein Lufttrocknerausgang A50 des Lufttrockners 50 ist über eine pneumatische Verbindungsleitung VL27 an die Hauptluftbehälterleitung HBL und dadurch im Weiteren über die Verbindungsleitungen VL1 und VL3 an das Reservoir R angeschlossen.

Als Lufttrockner 50 kommt ein kaltregenerierender ZweiKammer-Absorptionstrockner zum Einsatz. Dabei wird immer eine seiner beiden Trocknungskammern 51, 52 mit der von einem Kompressor 41 der Kompressoreinrichtung 40 gelieferten Druckluft, die noch feucht ist, durchströmt, um diese feuchte Druckluft zu Trocknen, während die jeweils andere der Trocknungskammern 51, 52 zur Regeneration mit der getrockneten Druckluft durchströmt wird.

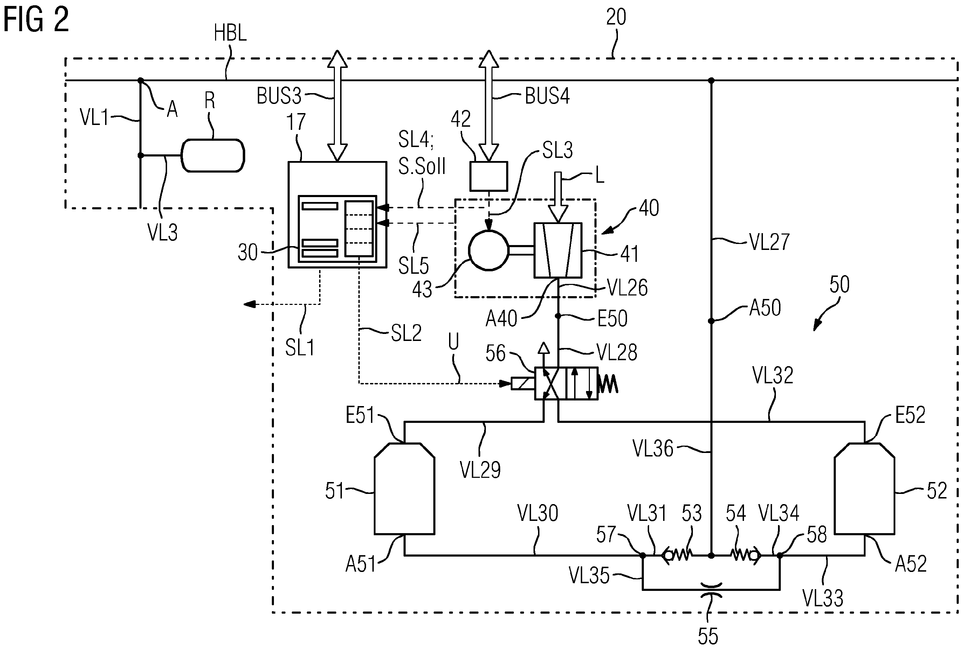

Hierzu umfasst der in den Figuren 1 und 2 gezeigte Lufttrockner 50 neben den zwei in üblicher Weise mit geeignetem Granulat gefüllten Trocknungskammern 51, 52 zwei Rückschlagventile 53, 54, eine Regenerationsdüse 55 und ein Schaltmittel 56.

Ferner umfasst der Lufttrockner 50 ein aus den pneumatischen Verbindungsleitungen VL 28 bis VL36 gebildetes Luftleitungssystem, das einerseits zum Einleiten der zu trocknenden Luft L in die Trocknungskammern und andererseits zum Leiten mittels der Trocknungskammern getrockneter Luft dient. Der mit VL34 bezeichnete Leitungsabschnitt, der mit der Regenerationsdüse versehen ist, bildet einen Regenerationsleitungsabschnitt, über den ein zur Regeneration der Trocknungskammern genutzter Teil der getrockneten Luft geleitet wird.

Die Verbindungsleitung VL28 verbindet den Lufttrocknereingang E50 mit einem ersten Anschluss A56.1 des Schaltmittels 56.

Die Verbindungsleitung VL29 verbindet einen zweiten Anschluss A56.2 des Schaltmittels 56 mit einem ersten Anschluss E51 der einen Trocknungskammer 51.

Die Verbindungsleitung VL32 verbindet einen dritten Anschluss A56.3 des Schaltmittels 56 mit einem ersten Anschluss E52 der anderen Trocknungskammer 52.

Die Kompressoreinrichtung 40 umfasst neben dem Kompressor 41 noch eine mittels einer I/O-Einheit 42 an den Datenbusabschnitt BUS4 der Signalübertragungseinrichtung angeschlossene Antriebseinheit 43. Als Antriebseinheit 43 dient dabei ein mittels eines Frequenzumrichters gesteuerter Antriebsmotors.

Der Kompressor 41 fördert Druckluft in die Verbindungsleitung VL26, die über die Verbindungsleitung V28 und das Schaltmittel 56 wechselweise an eine der beiden Trocknungskammern 51 oder 52 anschließbar ist. Nach Figur 1 befindet sich die Verbindungsleitung VL28 gerade in Verbindung mit der Trocknungskammer 52. Die Trocknungskammer 52 befindet sich damit in ihrer Trocknungsphase.

Die jeweils gerade nicht mit dem Leitungsabschnitt VL28 verbundene Trocknungskammer - in der Figur 1 ist dies die Trocknungskammer 51 - ist durch einen vierten Anschluss A56.4 des Schaltmittels 56 mit einer Entlüftung E zur Atmosphäre (ins Freie) verbunden. Die Trocknungskammer 51 befindet sich damit in ihrer Regenerationsphase. Die Trocknungskammern 51 und 52 sind gegenüberliegend zu ihren ersten Anschlüssen E51 und E52 mit zweiten Anschlüssen A51 und A52 versehen. An den zweiten Anschluss A51 der einen Trocknungskammer 51 ist die mit VL30 bezeichnete Verbindungsleitung angeschlossen und an den zweiten Anschluss A52 der anderen Trocknungskammer 52 ist die mit VL33 bezeichnete Verbindungsleitung angeschlossen. Die beiden Verbindungsleitungen VL30 und VL33 münden jeweils in einen Abzweigpunkt P1 bzw. P2, von dem der mit VL35 bezeichnete Leitungsabschnitt abzweigt. Dadurch wird der jeweils aktiven Trocknungskammer die getrocknete Druckluft zur Regeneration der gerade nicht aktiven Trocknungskammer direkt entnommen. Im Leitungsabschnitt VL31 ist das in Richtung des Abzweigpunktes P1 öffnende Rückschlagventil 53 angeordnet und im Leitungsabschnitt VL34 ist das in Richtung des Abzweigpunktes P2 öffnende Rückschlagventil 54 angeordnet. Die in Richtung der Hautluftbehälterleitung HBL weisenden Enden der beiden Verbindungsleitungen VL31 und VL34 bilden einen Abzweigpunkt P3, der über die Verbindungsleitung VL36 mit dem Lufttrocknerausgang A50 verbunden ist.

Sobald die Steuereinrichtung 30 ein Umschaltsignal U ausgibt, schaltet das Schaltmittel 56 aus der in Figur 1 gezeigten Schaltstellung in die in Figur 2 gezeigte Schaltstellung um. Nach dem Umschalten befindet sich die Trocknungskammer 52 in ihrer Regenerationsphase und die Trocknungskammer 51 in ihrer Trocknungsphase.

Die Steuereinrichtung 30 ist geeignet ausgebildet zur Steuerung des Schaltmittels 56 das Umschaltsignal U über eine Wirkverbindung - hier in Form einer Steuerleitung SL2 - an das Schaltmittel 56 auszugeben. Mittels des Umschaltsignals U steuert die Steuereinrichtung 30 das Schaltmittel 56 also derart, dass die beiden Trocknungskammern 51 und 52 wechselweise in eine Trocknungs- und eine Regenerationsphase schaltbar sind.

Dabei ist die Steuereinrichtung 30 geeignet ausgebildet einen der Kompressoreinrichtung 40 vorgegebenen Sollwert S.Soll zu erfassen und in Abhängigkeit des erfassten Sollwertes S.Soll das Umschaltsignal U auszugeben.

Der Sollwert S.Soll wird der Kompressoreinrichtung 40 beispielsweise von der zentralen Fahrzeugsteuerung 15 über die Signalübertragungseinrichtung, die I/O-Einheit 42 und eine Wirkverbindung SL3, die die I/O-Einheit 42 mit der Antriebseinheit 43 verbindet, vorgegeben.

Als Antriebseinheit 43 kommt - wie bereits erläutert - ein mittels eines Frequenzumrichters gesteuerter Antriebsmotor zum Einsatz. Dabei erfolgt die Anpassung an den Druckluftbedarf der Hauptluftbehälterleitung HBL durch stufenweise oder stufenlose Drehzahländerung des Antriebsmotors. Hierzu wird der Sollwert dem Frequenzumrichter von der zentralen Fahrzeugsteuerung 15 direkt als Drehzahlsollwert $S_n$.Soll oder aber als Frequenzsollwert $S_f$.Soll vorgegeben.

Sofern dem Frequenzumrichter der Drehzahlsollwert $S_n$.Soll direkt vorgegeben wird, regelt der Frequenzumrichter der Antriebseinheit 43 seinen Drehzahlistwert auf den vorgegebenen Drehzahlsollwert $S_n$.Soll.

Wird dem Frequenzumrichter der Frequenzsollwert $S_f$.Soll vorgegeben, so leitet der Frequenzumrichter daraus eine Solldrehzahl ab und regelt seinen Drehzahlistwert auf die vom vorgegebenen Frequenzsollwert $S_f$.Soll abgeleitete Solldrehzahl.

Über eine weitere Wirkverbindung SL4 zwischen der I/O-Einheit und der Steuereinrichtung 30 empfängt auch die Steuereinrichtung 30 den vorgegebenen Sollwert

$$S.Soll = \{S.Soll.1, \; S.Soll.2, \; …, \; S.Soll.i\},$$

wobei der Sollwert S.Soll vorzugsweise als Frequenzsollwert

$$S_f.Soll = \{S_f.Soll.1, \; S_f.Soll.2, \; …, \; S_f.Soll.i\}$$

oder als Drehzahlsollwert

$$S_n.Soll = \{S_n.Soll.1, \; S_n.Soll.2, \; …, \; S_n.Soll.i\}$$

vorgegeben ist.

Außerdem empfängt die Steuereinrichtung 30 über eine zwischen der Kompressoreinrichtung 40 und der Steuereinrichtung 30 ausgebildete Wirkverbindung SL5 den aktuellen Kompressoranschaltzustand

$$K = \{K.EIN, \; K.AUS\}$$

der Kompressoreinrichtung 40. Ein erster übertragener Signalwert K.EIN zeigt dabei an, dass die Kompressoreinrichtung 40 eingeschaltet ist - also läuft. Ein zweiter übertragener Signalwert K.AUS zeigt an, dass die Kompressoreinrichtung 40 ausgeschaltet ist - also nicht läuft.

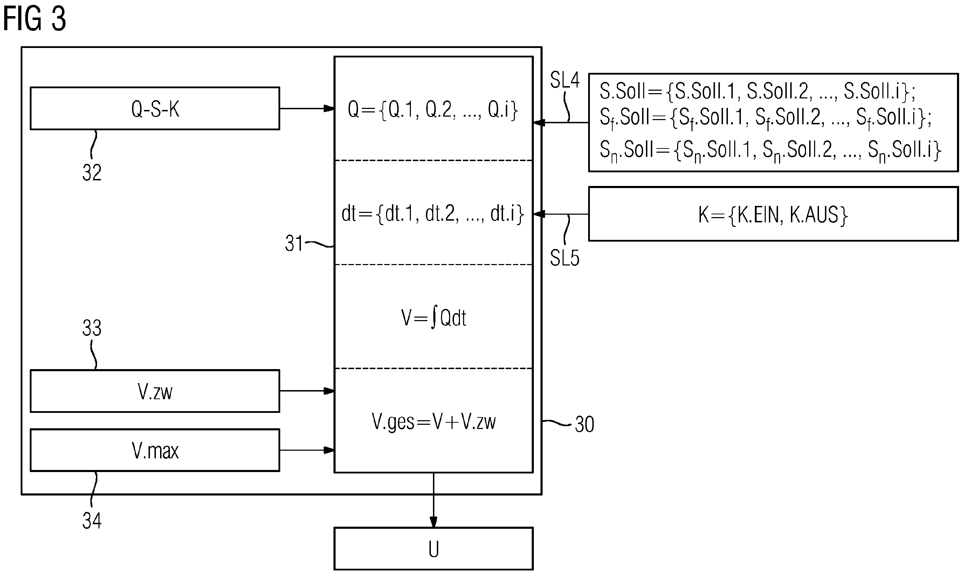

Das Umschaltsignal U ermittelt die Steuereinrichtung 30 mittels einer rechnerbasierten Auswertelogik 31 in der im Folgenden anhand der Figur 3 näher beschriebenen Weise.

Gemäß Figur 3 erfasst die Auswertelogik 31 der Steuereinrichtung 30 zunächst den der Kompressoreinrichtung 40 vorgegeben Sollwert S.Soll; $S_f$.oll; $S_n$.Soll über die Wirkverbindung SL4.

Ferner erfasst die Auswertelogik 31 der Steuereinrichtung 30 anhand der eingehenden Signalwerte K.EIN und K.AUS, die den Kompressoranschaltzustand K anzeigen, einen Zeitwert

$$dt = \{dt.1, \ dt.2, \ …, \ dt.i\},$$

der der Zeitspanne entspricht, bei der die Kompressoreinrichtung 40 eingeschaltet und in Abhängigkeit des vorgegebenen Sollwertes S.Soll; $S_f$.oll; $S_n$.Soll betrieben ist.

Im Weiteren erfasst die Auswertelogik 31 der Steuereinrichtung 30 anhand einer an einem Speicherplatz 32 der Steuereinrichtung 30 hinterlegten Förderleistung-Sollwert-Kennlinie Q-S-K eine dem Sollwert S.Soll; $S_f$.oll; $S_n$.Soll entsprechende Förderleistung

$$Q = \{Q.1, \ Q.2, \ …, \ Q.i\}.$$

Alternativ kann diese Kennlinie Q-S-K auch an anderer Stelle hinterlegt sein und von der Steuereinrichtung erfasst werden.

Durch Integration der Förderleistung Q über den Zeitwert dt ermittelt die Auswertelogik 31 der Steuereinrichtung 30 einen dem Sollwert entsprechenden Fördervolumenwert V.

$$V = \{V.1, \ V.2, \ …, \ V.i\} = \int Q \ dt$$
$$= \{\int Q.1 \ dt.1, \ \int Q.2 \ dt.2, \ …, \ \int Q.i \ dt.i\}$$

Erfolgt eine Anpassung des vorgegebenen Sollwertes - beispielsweise von einem ersten Sollwert S.Soll.1 über einen zweiten Sollwert S.Soll.2 bis zu einem i-ten Sollwert S.Soll.i, so ermittelt die Auswertelogik 31 der Steuereinrichtung 30 jeweils die den Sollwerten S.Soll.1, S.Soll.2, ..., S.Soll.i entsprechenden Fördervolumenwerte V.1, V.2, ..., V.i, wobei sich dann der Fördervolumenwert V aus der Summe V.1+V.2+...+ V.i ergibt.

Den Fördervolumenwert V summiert die Auswertelogik 31 der Steuereinrichtung 30 mit einem aktuell abgespeicherten Fördervolumenzwischenwert V.zw (dessen Anfangswert Null beträgt) zu einem Fördervolumengesamtwert

$$V.ges = V + V.zw$$

auf. Der Fördervolumenzwischenwert V.zw ist dabei an einem Speicherplatz 33 der Steuereinrichtung abgespeichert.

Die Auswertelogik 31 der Steuereinrichtung 30 gibt das Umschaltsignal U aus, wenn der Fördervolumengesamtwert V.ges einen an einem Speicherplatz 34 der Steuereinrichtung hinterlegten Fördervolumenmaximalwert V.max erreicht. Alternativ kann der Fördervolumenmaximalwert V.max auch an anderer Stelle hinterlegt sein und von der Steuereinrichtung 30 erfasst werden.

Wesentlich ist, dass die Integration der Förderleistung nur bei eingeschalteter Kompressoreinrichtung 40 erfolgt.

Wesentlich ist auch, dass der aktuell ermittelte Fördervolumengesamtwert V.ges in der Steuereinrichtung 30 abgespeichert wird, so dass nach einem Ausschalten der Kompressoreinrichtung 40 beim späteren Wiedereinschalten der Kompressoreinrichtung 40 bei dem Wert V.ges, der beim Ausschalten aktuell war, als Zwischenwert V.zw. gestartet werden kann. Wenn also die Kompressoreinrichtung 40 ausgeschaltet wird und beim Ausschalten der Kompressoreinrichtung der Fördervolumengesamtwert V.ges kleiner als der Fördervolumenmaximalwert V.max ist, so speichert die Steuereinrichtung den Fördervolumengesamtwert V.ges als den Zwischenwert V.zw am Speicherplatz 33 ab.

Abgespeichert werden kann auch der aktuell vorgegebene Sollwert S.Soll, so dass nach einem Ausschalten beim späteren Wiedereinschalten der Kompressoreinrichtung 40 zunächst mit dem abgespeicherten Sollwert S.Soll gestartet werden kann.

Sobald der Fördervolumengesamtwert V.ges den Fördervolumenmaximalwert V.max erreicht, wird nicht nur das Umschaltsignal U ausgegeben, sondern die Steuereinrichtung 30 setzt auch den Zwischenwert V.zw auf seinen Anfangswert Null zurück.

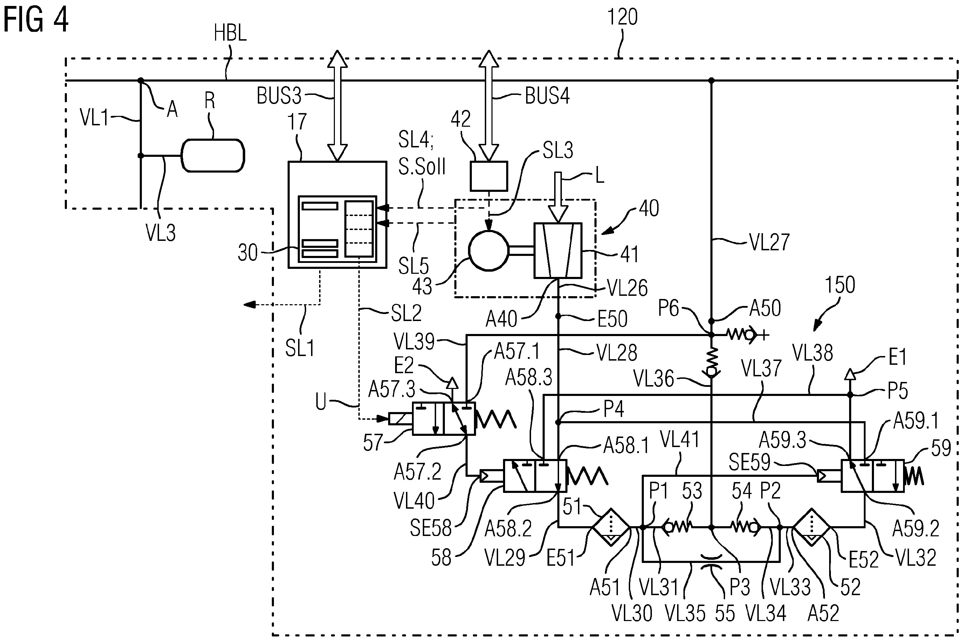

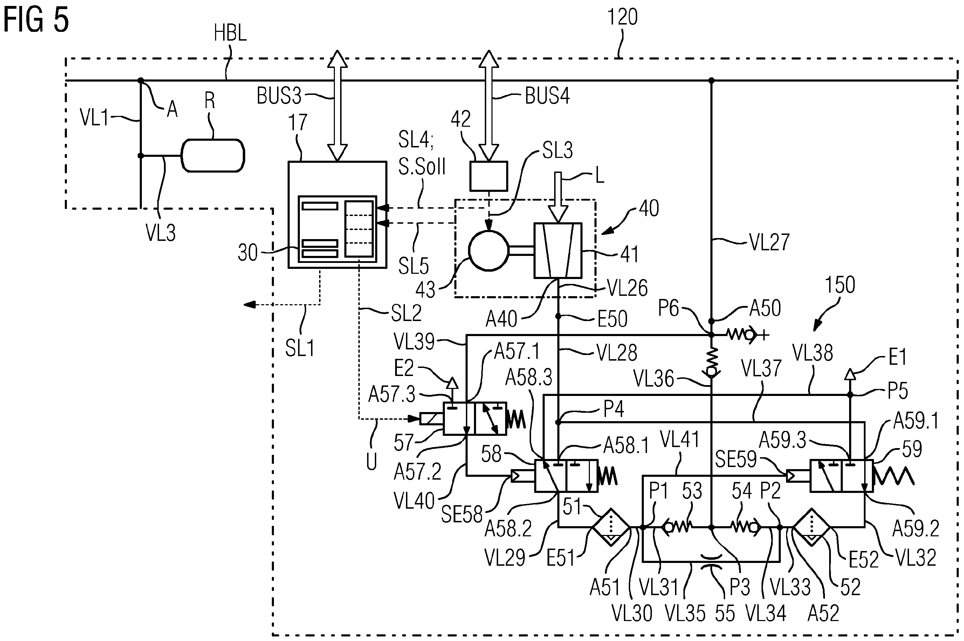

Die in den Figuren 4 und 5 gezeigte zweite Ausführungsform 120 der erfindungsgemäßen Anordnung unterscheidet sich lediglich hinsichtlich der konstruktiven Gestaltung des Lufttrockners 150 von der in den Figuren 1 und 2 gezeigten ersten Ausführungsform 20.

Der in den Figuren 4 und 5 als Ganzes mit 150 bezeichnete Lufttrockner weist neben einem mittels des Umschaltsignals U gesteuerten Schaltmittel 57 in Form eines Magnetventils zwei mittel Druckluft gesteuerte Wechselventile 58 und 59 auf, die in der dargestellten Weise über pneumatische Verbindungsleitungen VL28 bis VL41 mit zwei Trocknungskammern 51, 52 zwei Rückschlagventilen 53, 54 und einer Regenerationsdüse 55 verbunden sind.

Im Unterschied zum Lufttrockner 50 ist bei dem Lufttrockner 150 die Verbindungsleitung VL28 an einen ersten Anschluss A58.1 des Wechselventils 58 angeschlossen.

Weiterhin ist hier der Anschluss E51 des Lufttrockners 51 mit einem zweiten Anschluss A58.2 des Wechselventils 58 verbunden und der Anschluss E52 des Lufttrockners 52 ist mit einem zweiten Anschluss A59.2 des Wechselventils 58 verbunden.

Ferner ist ein erster Anschluss A59.1 des Wechselventils 59 über die Verbindungsleitung VL37, die in einem Abzweigpunkt P4 in die Verbindungsleitung VL28 mündet, mit dem ersten Anschluss A58.1 des Wechselventils 58 verbunden und ein dritter Anschluss A59.3 des Wechselventils 59 ist über die Verbindungsleitung VL38 mit einem dritten Anschluss A58.3 des Wechselventils 58 verbunden. Die Verbindungsleitung VL38 weist einen Abzweigpunkt P5 auf, der mit einer Entlüftung E1 zur Atmosphäre (ins Freie) verbunden ist.

Außerdem ist ein Abzweigpunkt P6 in der Verbindungsleitung VL36 über eine Verbindungsleitung VL39 mit einem ersten Anschluss A57.1 des Schaltmittels 57 verbunden und ein zweiter Anschluss A57.2 des Schaltmittels 57 ist über eine Verbindungsleitung VL40 mit einem pneumatischen Steuereingang SE58 des Wechselventils 58 verbunden. Ein pneumatischer Steuereingang SE59 des Wechselventils 59 ist mit dem Abzweigpunkt P1 über die Verbindungsleitung VL41 verbunden. Ein dritter Anschluss A57.3 des Schaltmittels 57 ist mit einer Entlüftung E2 zur Atmosphäre (ins Freie) verbunden.

Bei der in Figur 4 gezeigten Schaltstellung des durch das Umschaltsignal U umschaltbaren Schaltmittels 57, aus der die dargestellten Schaltstellungen der beiden Wechselventile 58, 59 resultieren, befindet sich die Trocknungskammer 51 in ihrer Trocknungsphase und die Trocknungskammer 52 in ihrer Regenerationsphase. Die Figuren 5 zeigt das Schaltmittel und die beiden Wechselventile in Ihrer Schaltstellung nach dem Umschalten, wobei sich nun die Trocknungskammer 51 in ihrer Regenerationsphase und die Trocknungskammer 52 in ihrer Trocknungsphase befindet.

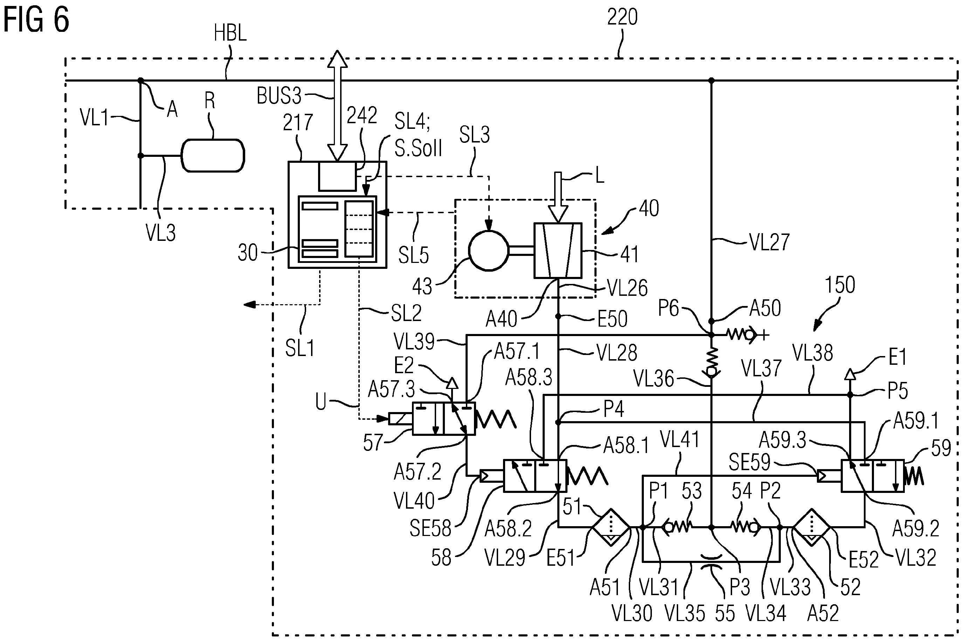

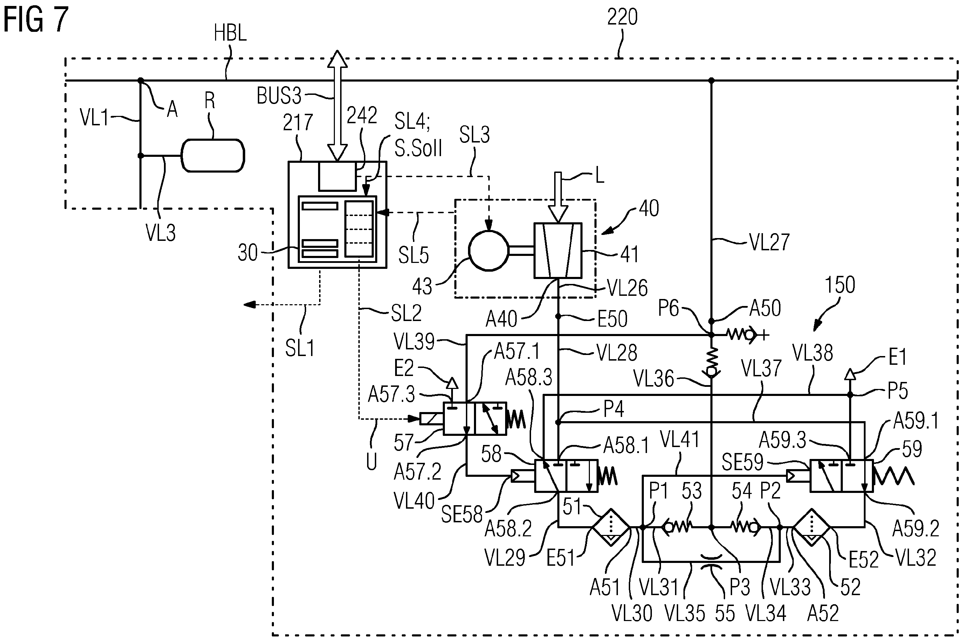

Die in den Figuren 6 und 7 gezeigte dritte Ausführungsform 220 der erfindungsgemäßen Anordnung unterscheidet sich lediglich hinsichtlich der Anordnung der I/O-Einheit 242 und deren Anbindung an die Signalübertragungseinrichtung von der in den Figuren 4 und 5 gezeigten zweiten Ausführungsform 120.

Bei der dritten Ausführungsform 220 der erfindungsgemäßen Anordnung ist die I/O-Einheit 242 Teil des Bremssteuergerätes 217, das die in der Figur 1 gezeigte Bremsanordnung 13 des Fahrzeugs 1 steuert.

**Patentansprüche**

1. Anordnung (20; 120; 220) zum Trocknen von Luft (L), mit einer Steuereinrichtung (30), einer Kompressoreinrichtung (40) und einem Lufttrockner (50), bei der durch Umschalten eines Umschaltmittels (56; 57) des Lufttrockners (50) unter der Einwirkung eines von einer Steuereinrichtung (30) an das Umschaltmittel (56; 57) ausgegebenen Umschaltsignals (U) zwei an die Kompressoreinrichtung (40) angeschlossene Trocknungskammern (51, 52) des Lufttrockners (50) wechselweise in eine Trocknungs- und eine Regenerationsphase schaltbar sind,
   **dadurch gekennzeichnet, dass**
   die Steuereinrichtung (30) geeignet ausgebildet ist, einen der Kompressoreinrichtung (40) vorgegeben Sollwert (S.Soll) zu erfassen und in Abhängigkeit des erfassten Sollwertes (S.Soll) das Umschaltsignal (U) auszugeben.

2. Anordnung (20; 120; 220) nach Anspruch 1,
   **dadurch gekennzeichnet, dass**
   die Steuereinrichtung (30) geeignet ausgebildet ist, als den vorgegebenen Sollwert (S.Soll) einen Frequenzsollwert ($S_f$.Soll) oder einen Drehzahlsollwert ($S_n$.Soll) zu erfassen, der einer Antriebseinheit (43) der Kompressoreinrichtung vorgegeben ist.

3. Anordnung (20; 120; 220) nach einem der Ansprüche 1 oder 2,
   **dadurch gekennzeichnet, dass**
   die Steuereinrichtung (30) geeignet ausgebildet ist,

   - einen Zeitwert (dt) zu erfassen, der der Zeitspanne entspricht, bei der die Kompressoreinrichtung (40) eingeschaltet und in Abhängigkeit des vorgegebenen Sollwertes (S.Soll; $S_f$.Soll; $S_n$.Soll) betrieben ist,
- anhand einer erfassten oder hinterlegten Förderleistung-Sollwert-Kennlinie (Q-S-K) eine dem Sollwert (S.Soll; $S_f$.Soll; $S_n$.Soll) entsprechende Förderleistung (Q) und durch Integration der Förderleistung (Q) über den Zeitwert (dt) einen dem Sollwert entsprechenden Fördervolumenwert (V) zu ermitteln und mit einem aktuell abgespeicherten Fördervolumenzwischenwert (V.zw) zu einem Fördervolumengesamtwert (V.ges) aufzusummieren und
- das Umschaltsignal (U) auszugeben, wenn der Fördervolumengesamtwert einen erfassten oder hinterlegten Fördervolumenmaximalwert (V.max) erreicht.

**4.** Anordnung (20; 120; 220) nach Anspruch 3,
**dadurch gekennzeichnet, dass**
die Steuereinrichtung (30) geeignet ausgebildet ist, den ermittelten Fördervolumengesamtwert (V.ges) als den Zwischenwert (V.zw) abzuspeichern, wenn der Fördervolumengesamtwert (V.ges) beim Ausschalten der Kompressoreinrichtung kleiner als der Fördervolumenmaximalwert (V.max) ist.

**5.** Fahrzeug (1), insbesondere Schienenfahrzeug, mit einer Anordnung (20; 120; 220) zum Trocknen von Luft (L),
**dadurch gekennzeichnet, dass**
die Anordnung (20; 120; 220) nach einem der Ansprüche 1 bis 4 ausgebildet ist.

**6.** Fahrzeug (1) nach Anspruch 5,
**dadurch gekennzeichnet, dass**
ein Bremssteuergerät (17; 217), das zumindest eine Bremsanordnung (13) des Fahrzeugs (1) steuert, die Steuereinrichtung (30) bildet.

**7.** Verfahren zum Trocknen von Luft (L), bei dem durch Umschalten eines Umschaltmittels (56; 57) eines Lufttrockners (50) unter der Einwirkung eines von einer Steuereinrichtung (30) an das Umschaltmittel (56; 57) ausgegebenen Umschaltsignals (U) zwei an eine Kompressoreinrichtung (40) angeschlossene Trocknungskammern (51, 52) des Lufttrockners (50) wechselweise in eine Trocknungs- und eine Regenerationsphase geschaltet werden,
**dadurch gekennzeichnet, dass**
die Steuereinrichtung (30) einen der Kompressoreinrichtung (40) vorgegeben Sollwert (S.Soll) erfasst und in Abhängigkeit des erfassten Sollwertes (S.Soll) das Umschaltsignal (U) ausgibt.

**8.** Verfahren nach Anspruch 7,
**dadurch gekennzeichnet, dass**
die Steuereinrichtung als den vorgegebenen Sollwert (S.Soll) einen Frequenzsollwert ($S_f$.Soll) oder einen Drehzahlsollwert ($S_n$.Soll) erfasst, der einer Antriebseinheit (43) der Kompressoreinrichtung (40) vorgegeben wird.

**9.** Verfahren nach einem der Ansprüche 7 oder 8,
**dadurch gekennzeichnet, dass**
die Steuereinrichtung (30)

- einen Zeitwert (dt) erfasst, der der Zeitspanne entspricht, bei der die Kompressoreinrichtung (40) eingeschaltet und in Abhängigkeit des vorgegebenen Sollwertes (S.Soll; $S_f$.Soll; $S_n$.Soll) betrieben ist,
- anhand einer erfassten oder hinterlegten Förderleistung-Sollwert-Kennlinie (Q-S-Kennlinie) eine dem Sollwert (S.Soll; $S_f$.Soll; $S_n$.Soll) entsprechende Förderleistung (Q) und durch Integration der Förderleistung (Q) über den Zeitwert (dt) einen dem Sollwert (S.Soll; $S_f$.Soll; $S_n$.Soll) entsprechenden Fördervolumenwert (V) ermittelt und mit einem aktuell abgespeicherten Fördervolumenzwischenwert (V.zw) zu einem Fördervolumengesamtwert (V.ges) aufsummiert und
- das Umschaltsignal (U) ausgibt, wenn der Fördervolumengesamtwert (V.ges) einen erfassten oder hinterlegten Fördervolumenmaximalwert (V.max) erreicht.

**10.** Verfahren nach Anspruch 9,
**dadurch gekennzeichnet, dass**
die Steuereinrichtung (30) den Fördervolumengesamtwert (V.ges) als den Zwischenwert (V.zw) abspeichert, wenn der Fördervolumengesamtwert (V.ges) beim Ausschalten der Kompressoreinrichtung (40) kleiner als der Fördervolumenmaximalwert (V.max) ist.

**Claims**

1. Arrangement (20; 120; 220) for drying air (L), having a control device (30), a compressor device (40) and an air drier (50), in which arrangement, by switching a switching means (56; 57) of the air drier (50) under the action of a switching signal (U) output by a control device (30) to the switching means (56; 57), two drying chambers (51, 52) of the air drier (50) which are connected to the compressor device (40) can be switched alternately into a drying phase and a regeneration phase,
   **characterized in that**
   the control device (30) is designed to be suitable for detecting a setpoint value (S.Soll) predefined for the compressor device (40) and for outputting the switching signal (U) in a manner dependent on the detected setpoint value (S.Soll).

2. Arrangement (20; 120; 220) according to Claim 1,
   **characterized in that**
   the control device (30) is designed to be suitable for detecting, as the predefined setpoint value (S.Soll), a frequency setpoint value ($S_f$.Soll) or a rotational speed setpoint value ($S_n$.Soll) which is predefined for a drive unit (43) of the compressor device.

3. Arrangement (20; 120; 220) according to either of Claims 1 and 2,
   **characterized in that**
   the control device (30) is designed to be suitable

   - for detecting a time value (dt) which corresponds to the time period in which the compressor device (40) is activated and is operated in a manner dependent on the predefined setpoint value (S.Soll; $S_f$.Soll; $S_n$.Soll),
   - for determining, on the basis of a detected or stored delivery rate setpoint value characteristic curve (Q-S characteristic curve), a delivery rate (Q) corresponding to the setpoint value (S.Soll; $S_f$.Soll; $S_n$.Soll) and, by integration of the delivery rate (Q) with respect to the time value (dt), for determining a delivery volume value (V) corresponding to the setpoint value and adding this to a presently stored delivery volume intermediate value (V.zw) to form a delivery volume total value (V.ges), and
   - for outputting the switching signal (U) when the delivery volume total value reaches a detected or stored delivery volume maximum value (V.max).

4. Arrangement (20; 120; 220) according to Claim 3,
   **characterized in that**
   the control device (30) is designed to be suitable for storing the determined delivery volume total value (V.ges) as the intermediate value (V.zw) if the delivery volume total value (V.ges) upon the deactivation of the compressor device is lower than the delivery volume maximum value (V.max).

5. Vehicle (1), in particular rail vehicle, having an arrangement (20; 120; 220) for the drying of air (L),
   **characterized in that**
   the arrangement (20; 120; 220) is designed according to one of Claims 1 to 4.

6. Vehicle (1) according to Claim 5,
   **characterized in that**
   a brake control unit (17; 217) which controls at least one brake arrangement (13) of the vehicle (1) forms the control device (30).

7. Method for drying air (L), in which method, by switching a switching means (56; 57) of an air drier (50) under the action of a switching signal (U) output by a control device (30) to the switching means (56; 57), two drying chambers (51, 52) of the air drier (50) which are connected to a compressor device (40) are switched alternately into a drying phase and a regeneration phase, **characterized in that** the control device (30) detects a setpoint value (S.Soll) predefined for the compressor device (40) and outputs the switching signal (U) in a manner dependent on the detected setpoint value (S.Soll).

8. Method according to Claim 7, **characterized in that**
   the control device detects, as the predefined setpoint value (S.Soll), a frequency setpoint value ($S_f$.Soll) or a rotational speed setpoint value ($S_n$.Soll) which is predefined for a drive unit (43) of the compressor device (40) .

9. Method according to either of Claims 7 and 8,

**characterized in that**
the control device (30)

- detects a time value (dt) which corresponds to the time period in which the compressor device (40) is activated and is operated in a manner dependent on the predefined setpoint value (S.Soll; $S_f$.Soll; $S_n$.Soll),
- determines, on the basis of a detected or stored delivery rate setpoint value characteristic curve (Q-S characteristic curve), a delivery rate (Q) corresponding to the setpoint value (S.Soll; $S_f$.Soll; $S_n$.Soll) and, by integration of the delivery rate (Q) with respect to the time value (dt), determines a delivery volume value (V) corresponding to the setpoint value (S.Soll; $S_f$.Soll; $S_n$.Soll) and adds this to a presently stored delivery volume intermediate value (V.zw) to form a delivery volume total value (V.ges), and
- outputs the switching signal (U) when the delivery volume total value (V.ges) reaches a detected or stored delivery volume maximum value (V.max).

10. Method according to Claim 9,
**characterized in that**
the control device (30) stores the delivery volume total value (V.ges) as the intermediate value (V.zw) if the delivery volume total value (V.ges) upon the deactivation of the compressor device (40) is lower than the delivery volume maximum value (V.max).

## Revendications

1. Système (20; 120; 220) de séchage d'air (L), comprenant un dispositif (30) de commande, un dispositif (40) de compresseur et un sécheur (50) d'air, dans lequel, par commutation d'un moyen (56; 57) de commutation du séchage (50) d'air, sous l'effet d'un signal (U) de commutation donné au moyen (56; 57) de commutation par un dispositif (30) de commande, deux chambres (51, 52) de séchage, raccordées au dispositif (40) de compresseur, du sécheur (50) d'air, peuvent être mises en alternance dans une phase de séchage et dans une phase de régénération,
**caractérisé en ce que**
le dispositif (30) de commande est constitué de manière appropriée pour détecter une valeur (S.Soll) de consigne prescrite au dispositif (40) de compresseur et pour donner le signal (U) de commutation en fonction de la valeur (S.Soll) de consigne détectée.

2. Système (20; 120; 220) suivant la revendication 1,
**caractérisé en ce que**
le dispositif (30) de commande est constitué de manière appropriée pour détecter, comme valeur (S.Soll) de consigne prescrite, une valeur ($S_f$.Soll) de consigne de fréquence ou une valeur ($S_n$.Soll) de consigne de vitesse de rotation, qui est prescrite à une unité (43) d'entraînement du dispositif de compresseur.

3. Système (20; 120; 220) suivant l'une des revendication 1 ou 2,
**caractérisé en ce que**
le dispositif (30) de commande est constitué de manière appropriée pour

- détecter une valeur (dt) de temps, qui correspond au laps de temps pendant lequel le dispositif (40) de compresseur est mis en circuit et, en fonction de la valeur (S.Soll; $S_f$.Soll; $S_n$.Soll) de consigne prescrite, est en fonctionnement,
- au moyen d'une courbe (Q-S-K) caractéristique de valeur de consigne de débit détectée ou mémorisée, déterminer un débit (Q) correspondant à la valeur (S.Soll; $S_f$.Soll; $S_n$.Soll) de consigne et, par intégration du débit (Q) sur la valeur (dt) de temps, déterminer une valeur (V) de volume véhiculé correspondant à la valeur de consigne et, pour la sommer, avec une valeur (V.zw) intermédiaire de volume véhiculé mémorisér présentement, en une valeur (V.ges) totale de volume véhiculé et
- donner le signal (U) de commutation, si la valeur totale de volume véhicule atteint une valeur (V.max) maximum de volume véhiculé détectée ou mémorisée.

4. Système (20; 120; 220) suivant la revendication 3,
**caractérisé en ce que**
le dispositif (30) de commande est constitué de manière appropriée pour mémoriser la valeur (V.ges) totale de volume véhiculé, qui a été déterminée, comme valeur (V.zw) intermédiaire, si la valeur (V.ges) totale de volume véhiculé est, lorsque le dispositif de compresseur est mis hors circuit, plus petite que la valeur (V.max) maximum de volume véhiculé.

**5.** Véhicule (1), notamment véhicule ferroviaire, comprenant un système (20; 120; 220) de séchage d'air (L),
**caractérisé en ce que**
le système (20; 120; 220) est constitué suivant l'une des revendications 1 à 4.

**6.** Véhicule (1) suivant la revendication 5,
**caractérisé en ce que**
un appareil (17; 217) de commande de frein, qui commande au moins un système (13) de frein du véhicule (1), forme le dispositif (30) de commande.

**7.** Procédé de séchage d'air (L), dans lequel, par commutation d'un moyen (56; 57) de commutation d'un sécheur (50) d'air, sous l'effet d'un signal (U) de commutation donné au moyen (56; 57) de commutation par un dispositif (30) de commande, deux chambres (51, 52) de séchage, raccordées à un dispositif (40) de compresseur, du sécheur (50) d'air, sont mises en alternance dans une phase de séchage et dans une phase de régulation,
**caractérisé en ce que**
le dispositif (30) de commande détecte une valeur (S.Soll) de consigne prescrite au dispositif (40) de compresseur et, en fonction de la valeur (S.Soll) de consigne détectée, donne le signal (U) de commutation.

**8.** Procédé suivant la revendication 7,
**caractérisé en ce que**
le dispositif de commande détecte, comme valeur (S.Soll) de consigne prescrite, une valeur ($S_f$.Soll) de consigne de fréquence ou une valeur ($S_n$.Soll) de consigne de vitesse de rotation, qui est prescrite à une unité (43) d'entraînement du dispositif (40) de compresseur.

**9.** procédé suivant l'une des revendications 7 ou 8,
**caractérisé en ce que**
le dispositif (30) de commande

- détecte une valeur (dt) de temps, qui correspond au laps de temps pendant lequel le dispositif (40) de compresseur est mis en circuit et, en fonction de la valeur (S.Soll; $S_f$.Soll; $S_n$.Soll) de consigne prescrite, est en fonctionnement,
- à l'aide d'une courbe (courbe Q-S), caractéristique de valeur de consigne de débit détectée ou mémorisée, détermine un débit correspondant à la valeur (S.Soll; $S_f$.Soll; $S_n$.Soll) de consigne et, par intégration du débit (Q) sur la valeur (dt) de temps, détermine une valeur (V) de volume véhiculé correspondant à la valeur S.Soll; $S_f$.Soll; $S_n$.Soll) de consigne et la somme, avec une valeur (V.zw) intermédiaire de volume véhiculé mémorisée présentement, en une valeur (V.ges) totale de volume véhiculé et
- donne le signal (U) de commutation, si la valeur (V.ges) totale de volume véhiculé atteint une valeur (V.max) maximum de volume véhiculé détectée ou mémorisée.

**10.** Procédé suivant la revendication 9,
**caractérisé en ce que**
le dispositif (30) de commande mémorise la valeur (V.ges) totale de volume véhiculé, comme valeur (V.zw) intermédiaire, si la valeur (V.ges) totale de volume véhiculé est, à la mise hors circuit du dispositif (40) de compresseur, plus petite que la valeur (V.max) maximum de volume véhiculé.

FIG 1A

| FIG 1A |
|--------|
| FIG 1B |

FIG 1

EP 3 079 958 B1

# FIG 1B

EP 3 079 958 B1

FIG 2

EP 3 079 958 B1

# FIG 3

FIG 4

FIG 5

FIG 6

FIG 7

EP 3 079 958 B1

19

**IN DER BESCHREIBUNG AUFGEFÜHRTE DOKUMENTE**

**In der Beschreibung aufgeführte Patentdokumente**

- EP 0199948 B1

- US 2003183077 A1